# EUROPEAN PATENT APPLICATION

(11) **EP 4 806 565 A1**
(43) Date of publication of application: **16.09.2026**
(21) Application number: 24888829.9
(22) Date of filing: 08.11.2024
(51) Int. Cl.: B07C 5/342, G06Q 10/30

(54) **DETERMINATION SYSTEM, DETERMINATION METHOD, AND COMPUTER PROGRAM**

(30) Priority: 08.11.2023 JP 2023190706
(71) Applicant: Nippon Steel Corporation, Tokyo 100-8071 (JP)
(72) Inventor: HIRANO, Koji, Tokyo 100-8071 (JP); TATEMIZO, Nobuyuki, Tokyo 100-8071 (JP); KAWAMURA, Keizo, Tokyo 101-0052 (JP); KANDA, Kazutoshi, Tokyo 101-0052 (JP); IKEDA, Kenji, Tokyo 101-0052 (JP)
(74) Representative: Zimmermann & Partner Patentanwälte mbB
(86) International application number: PCT/JP2024/039875
(87) International publication number: WO 2025/100538

(57) **Abstract**

A determination system including: an imaging device provided on a transporter for transporting iron scrap, and a foreign object determination device that acquires a determination target image captured by the imaging device and determines whether a foreign object is present in the iron scrap.

## Description

### TECHNICAL FIELD

The present invention relates to a determination system, a determination method, and a computer program. Priority is claimed on Japanese Patent Application No. 2023-190706 filed on November 8, 2023, the content of which is incorporated herein by reference.

### BACKGROUND ART

In recent years, in the steel industry, there has been a growing demand to recycle iron with the aim of achieving effects such as reducing carbon dioxide emissions. There are a plurality of types of scrap containing iron (iron scrap) as a recycling target. For example, new scrap generated in the working process of steel products is classified as high-grade scrap, whereas materials such as H2, produced from building demolition, are mainly classified as low-grade scrap. In order to produce high-grade steel, it is desirable to use the high-grade scrap, but relying solely on the high-grade scrap poses a risk of a future supply shortage. Therefore, it is necessary to utilize the low-grade scrap.

The low-grade scrap includes a high proportion of impurities other than iron, and the variation in their contents is large. This is because the influence of contamination with prohibited objects such as motors and power switch boards mixed into the iron scrap is large. Among the impurities, in a case where element components (tramp element (TE), representative examples: Cu, Sn, Ni, Cr, and Mo) that are difficult to remove in a steelmaking process are mixed into the steel, the element components can cause cracking during hot rolling and lead to nonconformity of material (mechanical properties). In order to solve such an issue, Patent Document 1 discloses a technology of using an overhead crane as a specific example of a transport device for iron scrap, thereby detecting prohibited objects along the route of the crane. Specifically, the following contents are disclosed. An overhead crane is pre-installed, and iron scrap is transported by the overhead crane. The transfer route of the overhead crane is fixed in advance, and a camera is pre-installed on this route. When the iron scrap is transported by the overhead crane, the camera on the route captures an image of the iron scrap. By using the image captured by the camera, the presence of the prohibited objects mixed in is determined, thereby prompting a worker to remove them.

### Citation List

### Patent Documents

Patent Document 1: Japanese Unexamined Patent Application, First Publication No. 2020-176909

### SUMMARY OF INVENTION

### Technical Problem

In conventional technology, as described above, it was assumed that the system had a fixed transfer route for the iron scrap transporting equipment. On the other hand, one option for transporting the iron scrap is to use a heavy machinery. Purchasing the heavy machinery offers the advantage of lower initial investment costs compared to constructing overhead cranes. Furthermore, while overhead cranes have a fixed transfer route, heavy machinery can move freely; this means that there is an advantage that the transport route of the iron scrap is not fixed. This freedom of movement allows for unloading and loading at any position in an iron scrap yard. Consequently, compared to overhead cranes, which limit the location of iron scrap storage to areas within their reach, the flexibility in utilizing storage sites for iron scrap is significantly improved.

However, if the installation locations of cameras are fixed to immovable objects such as the ground or walls as in the conventional system, the increased flexibility of transport routes requires installation of numerous fixed cameras throughout the expanded operating area of the heavy machinery. This results in high camera installation costs. To reduce the number of camera installation locations, it is possible to operationally define the transport routes of the heavy machinery so that iron scrap passes near the cameras. However, maintaining a constant distance between the camera and the iron scrap is not easy, because it increases the burden on the operator of the heavy machinery, and consequently, the distance between the iron scrap and the camera varies with each capture, potentially reducing detection accuracy. Furthermore, this approach may compromise the flexibility of the transport routes.

The issues associated with fixing the aforementioned camera to the immovable objects were also present in conventional technologies employing overhead cranes. Moreover, these problems were not limited to the detection of prohibited objects containing tramp elements, but were common to the detection of various foreign objects arising from other circumstances.

Therefore ,the present invention has been made in view of the above circumstances, and provides a technology that enables accurate determination of the presence of foreign objects mixed in iron scrap when a transporter is used for transporting the iron scrap.

### Solution to Problem

(1) One aspect of the present invention relates to a determination system including: an imaging device provided on a transporter for transporting iron scrap; and a foreign object determination device that acquires a determination target image captured by the imaging device and determines whether a foreign object is present in the iron scrap.
(2) One aspect of the present invention relates to the determination system according to the (1), wherein the imaging device is provided on a main body or a movable body of the transporter.
(3) One aspect of the present invention relates to the determination system according to the (1) or (2), wherein the imaging device captures an image of the iron scrap during a transport process by the transporter.
(4) One aspect of the present invention relates to the determination system according to any one of the (1) to (3), further including a timing determination device that determines a processing timing, which is one of: an image acquisition timing for acquiring the determination target image; an imaging timing for capturing the determination target image; and an output timing for outputting a determination result by the foreign object determination device, in which: when the timing determination device determines the image acquisition timing, the foreign object determination device acquires an image captured at the image acquisition timing from among the images captured by the imaging device, when the timing determination device determines the imaging timing, the imaging device captures the image at the imaging timing, and when the timing determination device determines the output timing, the foreign object determination device outputs a result of the determination made at the output timing.
(5) One aspect of the present invention relates to the determination system according to the (4), in which the timing determination device determines the processing timing based on an image captured by the imaging device or control information of the transporter.
(6) One aspect of the present invention relates to the determination system according to any one of the (1) to (5), in which the foreign object determination device acquires, for determination, a determination target image of the iron scrap being lifted by the transporter, captured from below.
(7) One aspect of the present invention relates to the determination system according to any one of the (1) to (6), in which the foreign object determination device acquires, for determination, a determination target image captured in a state where a portion holding the iron scrap being lifted by the transporter is facing the imaging device.
(8) One aspect of the present invention relates to the determination system according to any one of the (1) to (7), in which the foreign object determination device acquires, for determination, a determination target image captured in a state where the iron scrap lifted at least once by the transporter is, prior to being transported to a predetermined transport destination, placed in an area different from the transport destination.
(9) One aspect of the present invention relates to a determination method including: an image capture step of capturing an image with an imaging device provided on a transporter for transporting iron scrap, an acquisition step of acquiring an image captured by the imaging device as a determination target image, and a foreign object determination step of determining whether the iron scrap includes a foreign object using the determination target image acquired in the acquisition step.
(10) One aspect of the present invention relates to the determination method according to the (9), in which, in the image capture step, an image of the iron scrap being lifted by the transporter is captured from below.
(11) One aspect of the present invention relates to the determination method according to the (9) or (10), in which, in the image capture step, an image is captured in a state where a portion holding the iron scrap being lifted by the transporter is facing the imaging device.
(12) One aspect of the present invention relates to the determination method according to any one of the (9) to (11), in which, in the image capture step, an image is captured in a state where the iron scrap lifted at least once by the transporter is, prior to being transported to a predetermined transport destination, placed in an area different from the transport destination.
(13) One aspect of the present invention relates to a computer program for causing a computer to function as a foreign object determination device, for determining whether a foreign object is present in iron scrap, by acquiring a determination target image captured by an imaging device provided on a transporter for transporting the iron scrap and using the acquired determination target image.

### Advantageous Effects of Invention

According to the present invention, it is possible to accurately determine the presence of foreign objects mixed in with iron scrap, even when a transporter is used to transport the recycling target iron scrap.

### BRIEF DESCRIPTION OF DRAWING

[FIG. 1] A schematic block diagram showing a system configuration of a determination system 100 according to a first embodiment of the present invention.
[FIG. 2] A figure showing an example of the display output to the user.
[FIG. 3] A diagram showing an application example of the determination system 100.
[FIG. 4] A diagram showing a variation in the installation configuration of an imaging device 10.
[FIG. 5] A diagram showing a variation in the installation configuration of the imaging device 10.
[FIG. 6] A schematic block diagram showing a specific example of the functional configuration of a foreign object determination device 20.
[FIG. 7] A diagram showing a specific example of an image of iron scrap used as training data.
[FIG. 8] A flowchart showing a specific example of the processing of the foreign object determination device 20.
[FIG. 9] A diagram showing a first specific example of the implementation of the determination system 100 according to the first embodiment.
[FIG. 10] A diagram showing a second specific example of the implementation of the determination system 100 according to the first embodiment.
[FIG. 11] A diagram showing a third specific example of the implementation of the determination system 100 according to the first embodiment.
[FIG. 12] A diagram showing a fourth specific example of the implementation of the determination system 100 according to the first embodiment.
[FIG. 13] A diagram showing a specific example of the state of a heavy machinery 40.
[FIG. 14] A diagram showing a specific example of the state of the heavy machinery 40.
[FIG. 15] A schematic view of Area C.
[FIG. 16] A schematic block diagram showing the system configuration of the determination system 100 according to the second embodiment of the present invention.
[FIG. 17] A schematic block diagram showing a specific example of the functional configuration of a timing determination device 50.
[FIG. 18] A diagram showing a specific example of training data used to perform a learning process of a timing determination model.
[FIG. 19] A flowchart showing a specific example of the processing of the determination system 100 according to the second embodiment.
[FIG. 20] A diagram showing a first specific example of the implementation of the determination system 100 according to the second embodiment.
[FIG. 21] A diagram showing a second specific example of the implementation of the determination system 100 according to the second embodiment.
[FIG. 22] A diagram showing a third specific example of the implementation of the determination system 100 according to the second embodiment.
[FIG. 23] A diagram showing a fourth specific example of the implementation of the determination system 100 according to the second embodiment.
[FIG. 24] A diagram showing a fifth specific example of the implementation of the determination system 100 according to the second embodiment.
[FIG. 25] A diagram showing an example of the hardware configuration of an information processing device 90 applied to the present embodiment.
[FIG. 26] A flowchart showing a first modification example of the processing of the determination system 100 according to the second embodiment.
[FIG. 27] A flowchart showing a second modification example of the processing of the determination system 100 according to the second embodiment.

### DESCRIPTION OF EMBODIMENTS

### [First Embodiment]

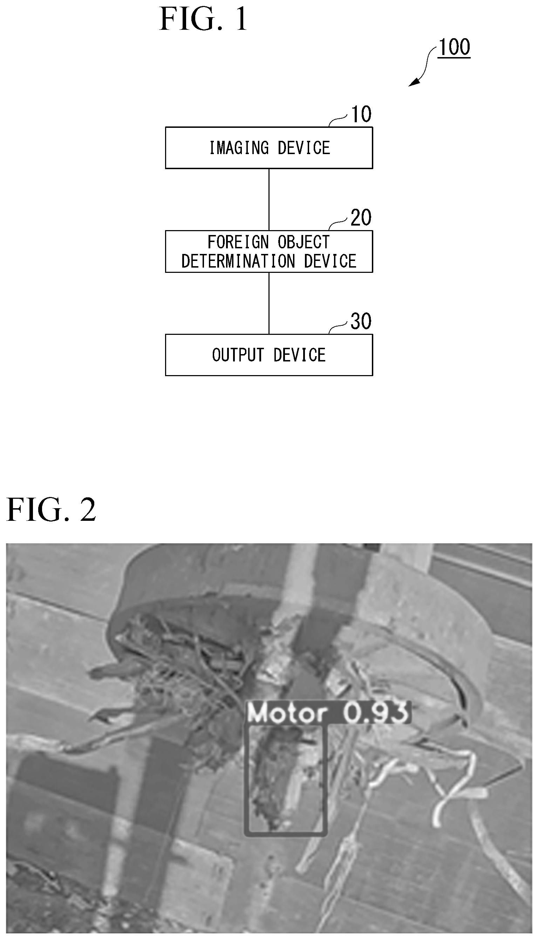

FIG. 1 is a schematic block diagram showing a system configuration of a determination system 100 according to a first embodiment of the present invention. The determination system 100 is used to determine the presence of foreign objects included in the iron scrap subject to the determination, based on an image of the iron scrap subject to the determination (hereinafter referred to as "determination target image") captured by an imaging device 10. In the present embodiment, "imaging or capture" refers to the generation of electronic image data in response to light entering an imaging element of the imaging device 10. That is, "imaging or capture" is not limited to the recording of image data onto a non-volatile recording medium.

The determination system 100 includes an imaging device 10, a foreign object determination device 20, and an output device 30. The imaging device 10 and the foreign object determination device 20 are connected such that data of an image captured by the imaging device 10 can be output to the foreign object determination device 20. The imaging device 10 and the foreign object determination device 20 may perform input/output of the image data via a bus, for example, by being integrally configured. The imaging device 10 and the foreign object determination device 20 may perform input/output of the image data, for example, by being connected via a cable. The imaging device 10 and the foreign object determination device 20 may perform input/output of the image data, for example, by performing short-range wireless communication, or by communicating via a network (e.g., a LAN, a mobile communication network, or the Internet). Note that in this embodiment, "image acquisition" refers to the acquisition of the image data generated after imaging by means of the foreign object determination device.

The foreign object determination device 20 and the output device 30 are connected such that at least the output device 30 can receive output of determination result data indicating the determination results from the foreign object determination device 20. The foreign object determination device 20 and the output device 30 may, for example, be integrally configured to enable input/output of the determination result data via a bus. The foreign object determination device 20 and the output device 30 may, for example, be connected by a cable to enable the input/output of the determination result data. The foreign object determination device 20 and the output device 30 may, for example, perform the input/output of the determination result data by conducting short-range wireless communication, or by communicating via a network (e.g., a LAN, a mobile communication network, or the Internet).

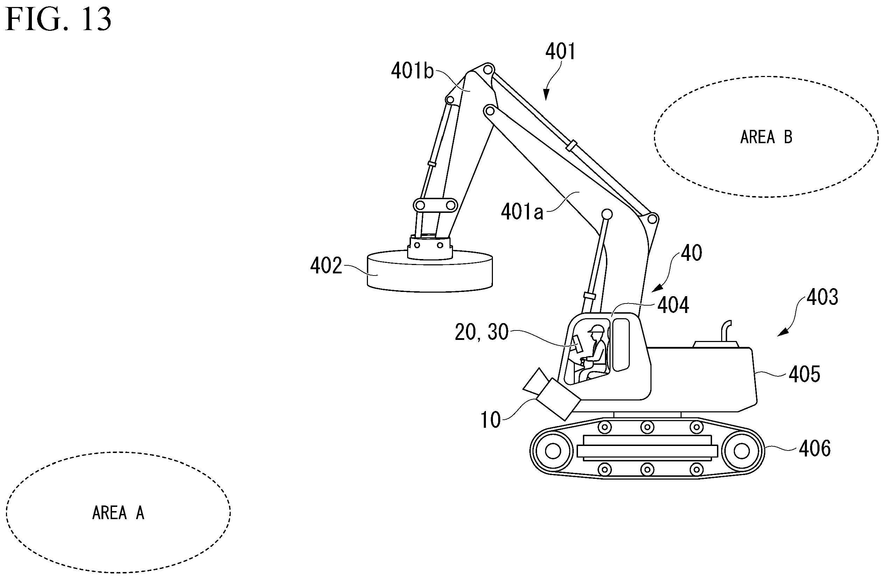

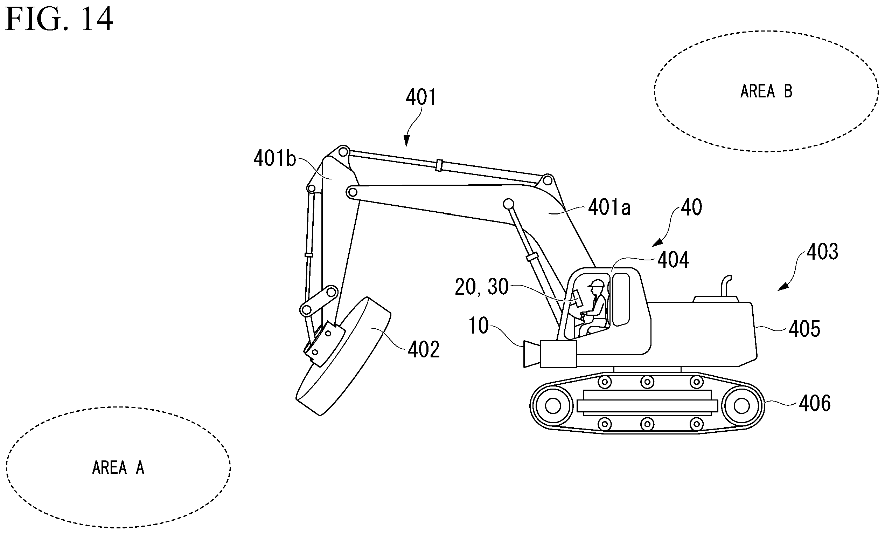

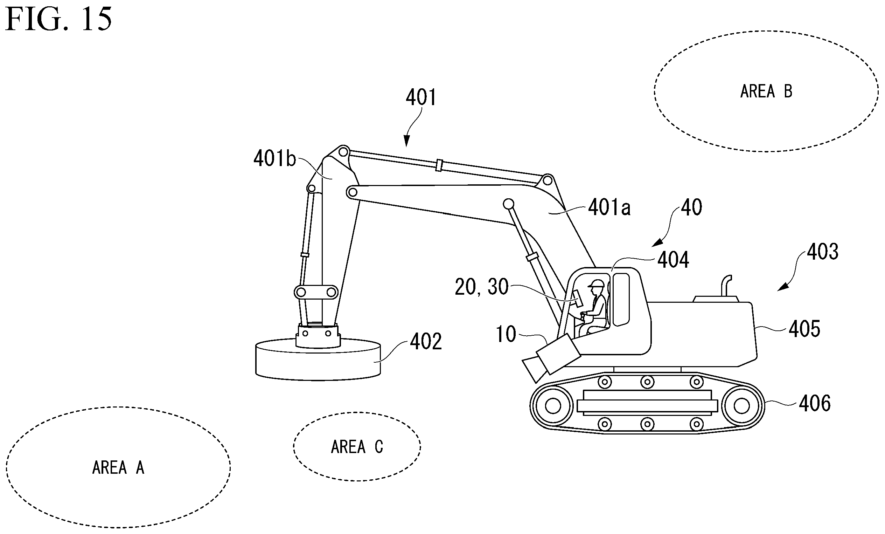

The imaging device 10 is a device equipped with at least an imaging element and configured to capture an image of the iron scrap subject to the determination. The captured image may be a still image or a moving image. The imaging device 10 may be configured using imaging equipment such as a digital still camera, digital video camera, smartphone, tablet, or smart camera. The imaging device 10 outputs the data of the captured image (particularly the determination target image) to the foreign object determination device 20. Furthermore, multiple imaging devices 10 may be installed within a single determination system 100. For example, multiple imaging devices 10 may be installed for a single heavy machinery 40 that will be described later. More specifically, multiple imaging devices 10 may be installed on the heavy machinery 40 at the positions and orientations exemplified in FIGs. 13 to 15 that will be described later. For example, an imaging device 10 in the position and orientation shown in FIG. 13, an imaging device 10 in the position and orientation shown in FIG. 14, and an imaging device 10 in the position and orientation shown in FIG. 15 may each be installed on the same heavy machinery 40. Note that the heavy machinery 40 is a specific example of a transporter.

The foreign object determination device 20 determines whether the iron scrap subject to the determination includes a predetermined foreign object based on the determination target image (determination target image including the iron scrap) captured by the imaging device 10. Specific examples of the predetermined foreign objects to be determined include objects such as (1) to (4). (1) Objects including a large amount of elemental components (tramp elements) that are difficult to remove during the steelmaking process. (2) Sealed objects (e.g., gas cylinders, tanks, etc.) that may pose a risk of explosion during the steelmaking process (e.g., the melting process). (3) Large objects or high-strength objects that may pose a risk of damaging a crushing machine in iron scrap that is to be fed into shredders or other crushing machines. (4) Combustible materials that can cause flames or other hazards in the steelmaking process. The foreign object determination device 20 outputs data indicating the determination result (determination result data) to the output device 30.

The output device 30 performs output processing based on the determination results from the foreign object determination device 20. The output device 30 is a device that outputs information in a manner recognizable to the user (e.g., a worker performing work using the determination system 100). The output device 30 may be configured using, for example, an image output device (e.g., a display) capable of displaying characters or images, a device (e.g., a speaker or headphones) capable of outputting sound or audio, or information devices capable of connecting to such devices, or information devices that integrate these devices. Specific examples of such information devices include smartphones, tablets, and dedicated devices. FIG. 2 is a figure showing an example of display output to the user. A motor is detected as a foreign object within the iron scrap held by a lift magnet, and then a rectangle surrounding the motor is generated at the motor's position. As shown in FIG. 2, the confidence level of a foreign object determination model for the detection result (shown as 0.93 in FIG. 2; minimum value is 0.0, maximum value is 1.0) may also be displayed.

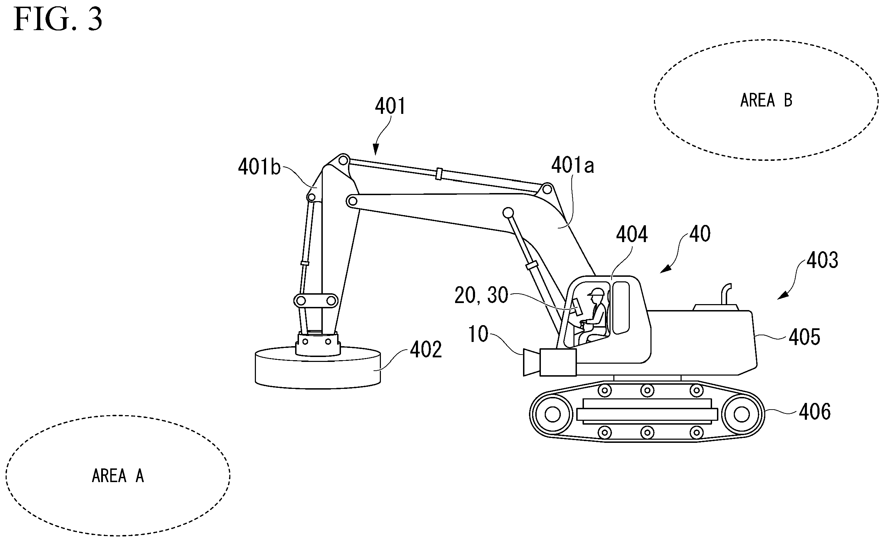

FIG. 3 is an application example of the determination system 100. As shown in FIG. 3, the determination system 100 may be applied to a transportable heavy machinery 40. In the example of FIG. 3, the heavy machinery 40 is a machinery capable of transporting the iron scrap. The heavy machinery 40 may be a device capable of transporting the iron scrap over a longer distance by self-propulsion. The heavy machinery 40 may be, for example, a hydraulic excavator or similar machineries. The heavy machinery 40 is configured by, for example, a main body 403; a movable body 401 movable relative to the main body 403; a traveling body 406 for driving the heavy machinery 40; and a connecting device which connects the main body 403, etc., to the traveling body 406 in a displaceable manner, such as a rotating device in a rotatable manner. In the example of FIG. 3, a lift magnet 402 is mounted as a transport attachment (transport tool) on the tip of the movable body 401 of the heavy machinery 40. The movable body 401 may include, for example, a boom 401a and an arm 401b, or may include movable parts other than the boom 401a and arm 401b. The attachment mounted on the tip of the movable body 401 is not limited to the lift magnet 402. The attachment mounted on the tip of the movable body 401 may have any configuration capable of holding the iron scrap above the ground. For example, an attachment capable of holding (gripping) the iron scrap by opening and closing multiple operable members, such as a grapple or an excavator-mounted crusher, may also be used. The main body 403 includes, for example, an operator cab 404 forming a space for the operator to ride in, and a rotating body 405 (displacement body) that rotates (displaces) together with the operator cab 404.

The heavy machinery 40 lifts the iron scrap located in Area A and transports the iron scrap to Area B. The heavy machinery 40 may move in response to the operation by the operator or in response to predetermined control from an information processing device 90. In the example shown in FIG. 3, the heavy machinery 40 is provided with the imaging device 10, the foreign object determination device 20, and the output device 30. The imaging device 10 may be installed, for example, on the main body 403 of the heavy machinery 40 (e.g., the operator cab 404 or the rotating body 405 near the operator cab 404) and installed toward a predetermined direction (e.g., toward the tip of the movable body 401). Specifically, the imaging device 10 may be installed, for example, to face forward and diagonally downward from the main body 403. Area A and Area B may each be any type of area. For example, either or both of Area A and Area B may be an area such as a ground or floor surface, a truck bed or railway freight car bed, a ship's hold, a container for transporting the iron scrap (e.g., a pot-shaped container), an inlet for putting the iron scrap into an iron scrap processing device (e.g., a scrap shooter), or another area. As one specific example, Area A may be a cargo bed, and Area B may be ground designated as an iron scrap yard.

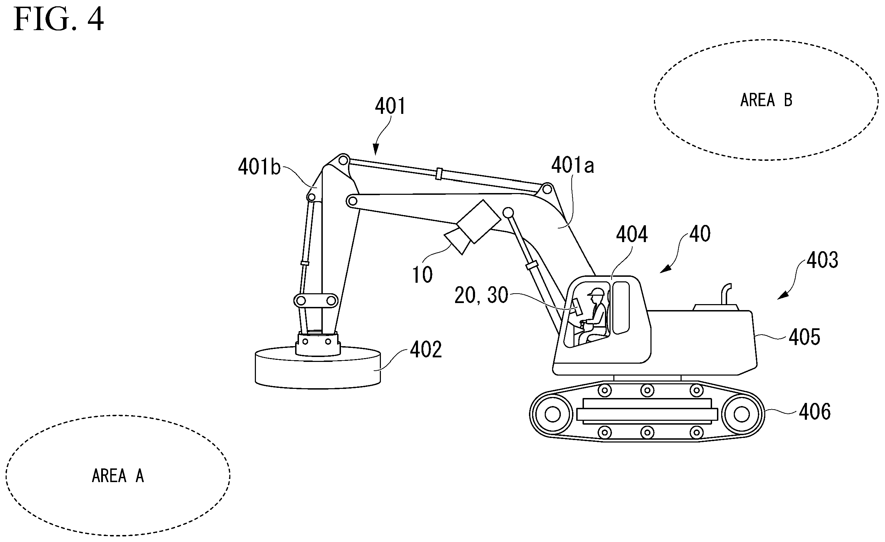

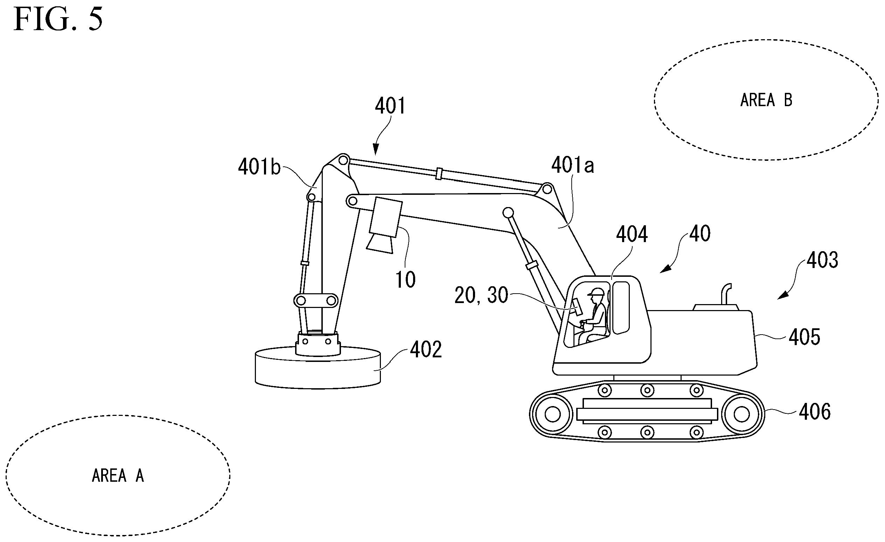

FIGs. 4 and 5 are diagrams showing variations in the installation configuration of the imaging device 10. On the heavy machinery 40, the imaging device 10 may be provided at any position and in any manner as long as it can capture an image of the iron scrap subject to the determination. As shown in FIG. 4, the imaging device 10 may be provided at a relatively low position on the movable body 401 (e.g., relatively close to the operator cab 404). In this case, the imaging device 10 may be installed to face diagonally downward. As shown in FIG. 5, the imaging device 10 may be provided on the movable body 401 at a relatively high position (e.g., relatively close to the joint portion of the movable body 401). In this case, the imaging device 10 may be installed to face diagonally downward or directly downward. When the imaging device 10 is installed to face diagonally downward in the configuration shown in FIG. 5, the imaging device 10 may be installed at an angle closer to directly downward compared to the configuration shown in FIG. 4. By positioning the imaging device 10 in this manner, the imaging device 10 can be installed at a higher elevation (on the movable body 401) than the operator cab 404. Consequently, it becomes possible to capture an image of the iron scrap over a broader area, thereby preventing situations in which only some of the iron scrap is captured. This results in more accurate determination of the presence of foreign objects. Furthermore, the configurations shown in FIGs. 4 and 5 allow imaging from an angle different from that of the operator cab 404. Consequently, the operator can visually confirm the scrap from the operator cab 404 while also determining the presence of foreign objects based on multiple images captured from multiple angles beyond the visual line of sight, thereby reducing the risk of the detection failure of the foreign objects. In the case of FIG. 4 or FIG. 5, the imaging device 10 may be installed so as to face the direction toward the tip of the movable body 401, or provided so as to face the area (Area A) where the iron scrap subject to the determination is piled up when the heavy machinery 40 lifts the iron scrap, or face the area (Area B) where the iron scrap subject to the determination is piled up when the heavy machinery 40 unloads the iron scrap. The imaging device 10 may include a movable body for changing the imaging direction. When the heavy machinery 40 transports the iron scrap from Area A to Area B, the imaging device 10 may change the imaging direction in accordance with the transportation of the iron scrap. For example, the imaging device 10 may be moved to constantly track and image the position of the tip portion of the movable body 401 (e.g., the lift magnet 402). This tracking movement of the imaging device 10 may be performed automatically by an apparatus that is not shown, or may be performed by a person (e.g., an operator).

The output device 30 is used, for example, in the operator cab 404. The output device 30 may output information to the operator who operates the heavy machinery 40 in the operator cab 404. The output device 30 may be fixedly installed within the operator cab 404 or may be removably installed. When removable, the output device 30 may be brought into the operator cab 404 from outside when the operator is in operation. The output device 30 need not necessarily be installed in the operator cab 404 of the heavy machinery 40; it may, for example, be held by a person outside the heavy machinery 40 (a worker other than the operator of the heavy machinery 40).

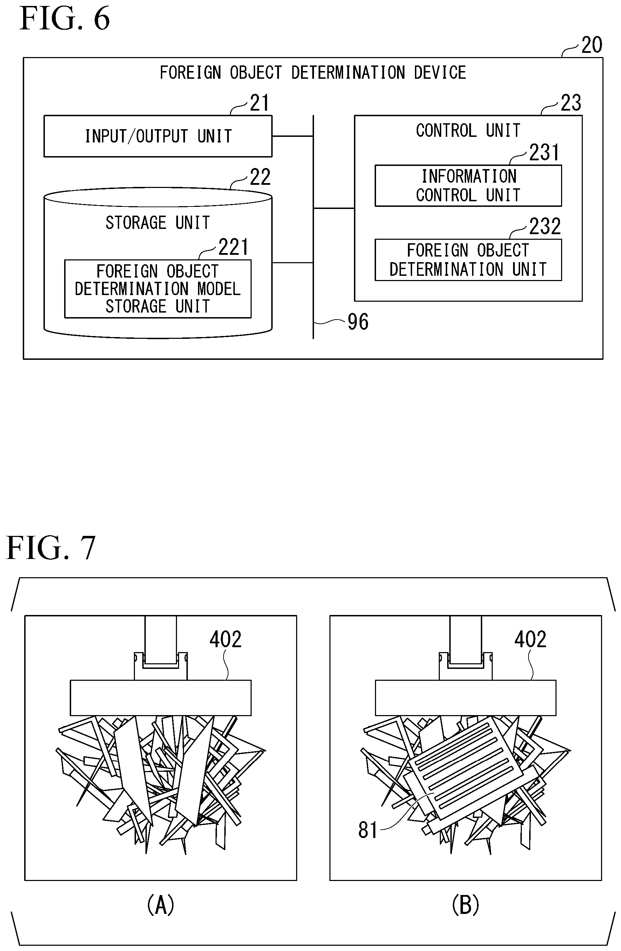

FIG. 6 is a schematic block diagram showing a specific example of the functional configuration of the foreign object determination device 20. An input/output unit 21 acquires image data of the determination target image from the imaging device 10. The input/output unit 21 outputs the determination result data to the output device 30. The input/output unit 21 may be configured using an interface with a bus or cable, or may be configured using communication equipment. If the input/output unit 21 is communication equipment, the input/output unit 21 may perform data communication with other devices via a network under the control of the control unit 23. In this case, the communication equipment may be a device performing wireless communication or a device performing wired communication.

A storage unit 22 stores data used by the control unit 23. The storage unit 22 may function, for example, as a foreign object determination model storage unit 221. The foreign object determination model storage unit 221 stores a foreign object determination model. The foreign object determination model is a function or logic, accompanied by predetermined input/output information, used to determine the presence of an image of predetermined foreign objects in the determination target image.

The foreign object determination model is generated in advance by a model building process. This model building process may be performed, for example, by another device, by the device itself (the foreign object determination device 20), or by human labor. The foreign object determination model stored in foreign object determination model storage unit 221 will be described below.

The foreign object determination model may be obtained, for example, through model building process using known data. The foreign object determination model may be a trained model obtained by performing supervised learning process using multiple known data points (training data) having ground truth labels, or it may be a model obtained by performing statistical processing using known data, or it may be another type of model. Specific examples of the learning process include multivariate analysis, socalled machine learning, and deep learning. As the learning process, learning process for classification may be used or learning process for regression may be used in accordance with the ground truth label used in the training data. The control unit 23 determines the presence of the foreign object in the iron scrap subject to the determination by using the foreign object determination model stored in the foreign object determination model storage unit 221. The training data used in this embodiment will be described below.

As training data, each image of iron scrap that is lifted by an attachment mounted on a tip of the movable body of the heavy machinery may be used in combination with a ground truth label (information indicating the presence or absence of the foreign object). Images used as training data may include images captured under conditions similar to those of the imaging device 10 of the heavy machinery 40 to which the determination system 100 is applied. For example, if the iron scrap captured by the imaging device 10 is iron scrap piled in Area A or Area B, an image of the iron scrap in a piled state may be used as training data. For example, if the iron scrap captured by the imaging device 10 is iron scrap lifted by a lift magnet, an image of the iron scrap that is lifted by the lift magnet may be used as training data. In this case, the lifting equipment is not necessarily limited to a lift magnet; an image of the iron scrap being lifted by other attachments may also be used as the training data.

As the training data, images of iron scrap including foreign objects and images of iron scrap not including foreign objects may be used. An image of iron scrap including foreign objects may be either an image captured while foreign objects are actually included, or an image in which an image of foreign objects has been synthetically added through image processing to an image captured without any actual foreign objects.

FIG. 7 shows specific examples of images of iron scrap used as training data. Both FIG. 7(A) and FIG. 7(B) are images of iron scrap that is lifted by the lift magnet 402. In FIG. 7(A), the iron scrap includes no foreign object. In contrast, FIG. 7(B) shows the iron scrap including a motor 81 as a foreign object. Thus, an image captured while no foreign object is included (e.g., FIG. 7(A)) and an image captured while a foreign object is included (e.g., FIG. 7(B)) may both be used as training data.

As one type of the foreign object determination model, an image classification model that outputs whether a single input image includes a foreign object, as shown in FIG. 7(A) and FIG. 7(B), may be used. In this case, when a foreign object is present, the model may also output the specific type of the foreign object. Alternatively, another type of the foreign object determination model may be used, which, when a single image as shown in FIG. 7(A) or FIG. 7(B) is input, outputs not only whether the image includes a foreign object but also, if a foreign object is present, information indicating the location of the foreign object within the image. Methods for outputting such foreign object locations include object detection models that enclose a foreign object within an image using a bounding box, and segmentation models that mask a foreign object within an image; either may be used. The training data for the object detection model includes not only images like those shown in FIG. 7(A) and FIG. 7(B), but for FIG. 7(B) including a foreign object, it also includes information about the bounding box surrounding that foreign object. The training data for the segmentation model includes not only images like those shown in FIG. 7(A) and FIG. 7(B), but also, for FIG. 7(B) including a foreign object, area information as a set of pixels corresponding to the positions where the foreign object exists among all pixels in the image.

The types of the foreign object determination models are not limited to those generated by supervised learning as described above. It is also possible to use a publicly available anomaly detection model in which only images of iron scrap without a foreign object are learned in an unsupervised manner in order to generate a trained model that is to learn the features of such iron scrap, and in which, when images of iron scrap including foreign objects are input during an actual operation, a portion including the foreign object is detected based on the absence of the learned features. For such publicly available detection models based on supervised learning or anomaly detection models, for example, the model described in WO 2022/260133 may be used.

The processor in the control unit 23 functions as an information control unit 231 and a foreign object determination unit 232 by executing the program.

The information control unit 231 controls the input and output of information. For example, the information control unit 231 acquires data (image data) of the determination target image from the imaging device 10 via the input/output unit 21. For example, the information control unit 231 outputs data (determination result data) indicating the determination result by the control unit 23 to the output device 30 via the input/output unit 21.

The foreign object determination unit 232 performs foreign object determination processing by acquiring the foreign object determination model stored in the foreign object determination model storage unit 221 and the determination target image acquired from the imaging device 10. In the foreign object determination process, it is determined whether the determination target image captured by the imaging device 10 includes an image of foreign objects. Specifically, it is determined whether the iron scrap subject to the determination includes predetermined foreign objects.

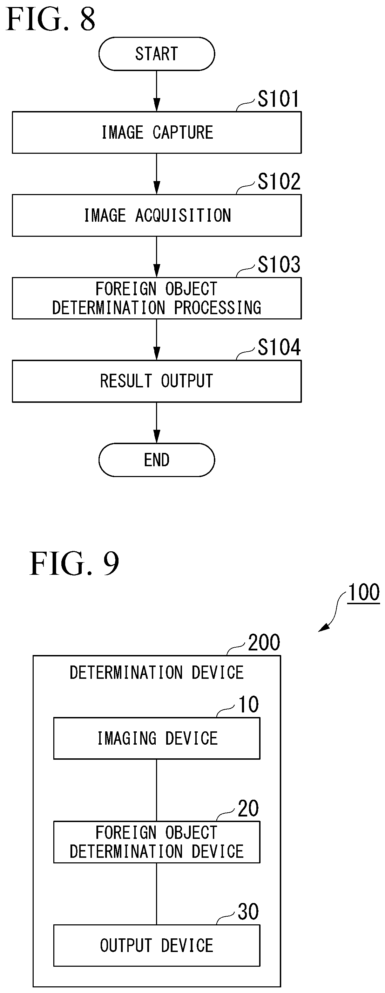

FIG. 8 is a flowchart showing a specific example of the processing performed by the foreign object determination device 20. First, the imaging device 10 performs imaging (Step S101), and thereafter, the information control unit 231 outputs image data from the imaging device 10 via the input/output unit 21, and the foreign object determination unit acquires that image data (Step S102). The foreign object determination unit 232 performs a determination process using at least the foreign object determination model and the image data (Step S103). The information control unit 231 transmits information indicating the determination result to the output device 30 (Step S104). Note that this transmission may be performed, for example, only when it is determined that a foreign object is present.

FIG. 9 is a diagram showing a first specific example of implementing the determination system 100 according to the first embodiment. In the determination system 100 shown in FIG. 9, the imaging device 10, the foreign object determination device 20, and the output device 30 are configured as a single determination device 200. The determination device 200 configured in this manner may further include a manipulation unit (such as a touch panel, buttons, or a keyboard) that accepts manipulations from a user, such as a worker. The user may, for example, be an operator of the heavy machinery 40.

The determination device 200 may be manipulated by a user, and based on the manipulation, the imaging device 10 may activate to capture an image of the iron scrap subject to the determination. Alternatively, repeated imaging or capturing of moving images may occur without user manipulation. The determination target image generated by the imaging device 10 is input to the foreign object determination device 20, and then the foreign object determination device 20 determines the presence of a foreign object. The determination result is output to the user via the output device 30. Such a determination device 200 may be configured using, for example, a smartphone or tablet. In this case, the smartphone or tablet functions as the foreign object determination device 20 when an application installed on it is launched. Furthermore, the imaging device 10 and the output device 30 may each be configured using equipment pre-installed on the smartphone or tablet, or using equipment connected to the smartphone or tablet.

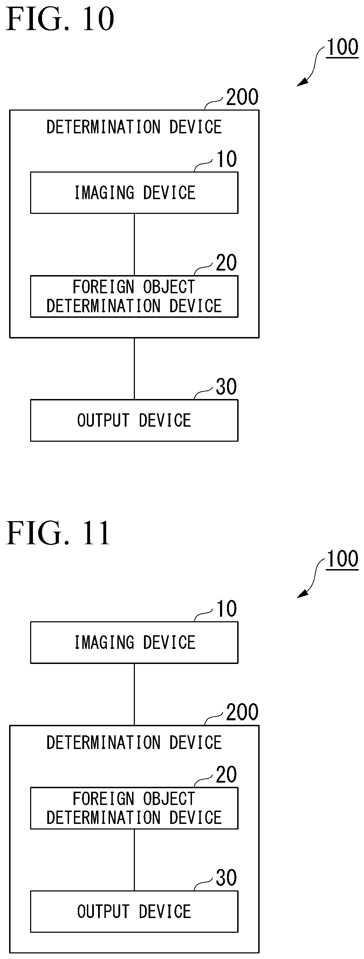

FIG. 10 is a diagram showing a second specific example of implementing the determination system 100 according to the first embodiment. In the determination system 100 shown in FIG. 10, the imaging device 10 and the foreign object determination device 20 are configured as the determination device 200, and the output device 30 is configured as another device. The determination device 200 configured in this manner may be provided at locations where the imaging device 10 for the heavy machinery 40 is installed as shown in FIGs. 3 to 5. In this case, the determination device 200 and the output device 30 are connected such that they can communicate (e.g., via wireless communication). Therefore, the determination device 200 and the output device 30 may each further include communication devices.

The determination device 200 may be configured using, for example, a smartphone or tablet, or may be configured as a device with information processing functions added to an imaging device, such as a smart camera. Such information processing functions may be built within a single housing with the imaging device 10, or they may be built by connecting a single-board computer to the imaging device 10. The information processing functions serve as the foreign object determination device 20. Furthermore, the output device 30 may be configured using a smartphone or tablet. In this case, the output device 30 may be configured using devices already incorporated within the smartphone or tablet, or using devices connected to the smartphone or tablet.

FIG. 11 is a diagram showing a third specific example of implementing the determination system 100 according to the first embodiment. In the determination system 100 shown in FIG. 11, the foreign object determination device 20 and the output device 30 are configured as the determination device 200, and the imaging device 10 is configured as another device. The imaging device 10 configured in this manner may be mounted, for example, at locations where the imaging device 10 for the heavy machinery 40 is installed as shown in FIGs. 3 to 5. In this case, the imaging device 10 and the determination device 200 are connected such that they can communicate (e.g., via wireless communication). Therefore, the imaging device 10 and the determination device 200 may each further include communication devices.

The determination device 200 may be provided, for example, at locations where the output device 30 for the heavy machinery 40 is installed as shown in FIGs. 3 to 5. The determination device 200 receives the determination target image captured by the imaging device 10 via communication from the imaging device 10 and performs determination processing. The determination device 200 outputs the determination result through the output device 30. The determination device 200 may be configured using, for example, a smartphone or tablet. In this case, the output device 30 may be configured using equipment pre-equipped in the smartphone or tablet, or using equipment connected to the smartphone or tablet.

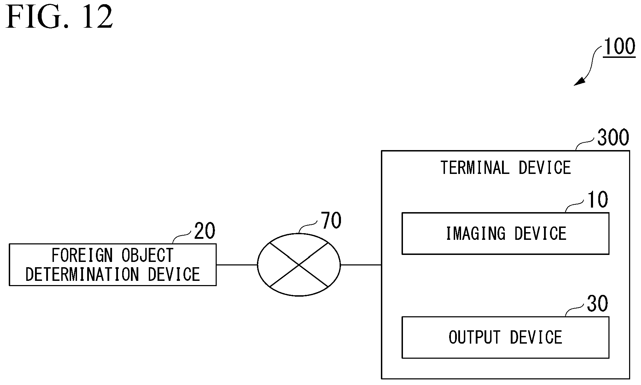

FIG. 12 is a diagram showing a fourth specific example of implementing the determination system 100 according to the first embodiment. In the determination system 100 shown in FIG. 12, the imaging device 10 and the output device 30 are configured as a terminal device 300, and the foreign object determination device 20 is configured as another device. The foreign object determination device 20 and the terminal device 300 are connected in a manner enabling communication via a communication path such as a network 70. The foreign object determination device 20 may be configured using an information processing device such as a server device or cloud.

The terminal device 300 configured in this manner may be provided, for example, at locations where the output device 30 for the heavy machinery 40 is installed as shown in FIGs. 3 to 5. The terminal device 300 configured in this manner may further include a manipulation unit (such as a touch panel, buttons, or keyboard) that accepts manipulations from a user, such as an operator. The user may, for example, be an operator of the heavy machinery 40. The terminal device 300 may be manipulated by the user, and based on the manipulation, the imaging device 10 may activate to capture an image of the iron scrap subject to the determination. Alternatively, repeated imaging or capturing of moving images may occur without user manipulation. The determination target image generated by the imaging device 10 is transmitted to the foreign object determination device 20 via communication using the communication device.

The foreign object determination device 20, upon receiving the determination target image, determines whether the received determination target image includes a foreign object. The foreign object determination device 20 transmits information indicating the determination result to the terminal device 300. The terminal device 300, upon receiving the determination result from the foreign object determination device 20, causes the output device 30 to output the determination result to the user. Such a terminal device 300 may be configured using, for example, a smartphone or tablet. Furthermore, the imaging device 10 and the output device 30 may each be configured using equipment pre-equipped in the smartphone or tablet, or using equipment connected to the smartphone or tablet.

Specific examples of the implementation of the determination system 100 according to the first embodiment have been explained above using FIGs. 9 to 12, but the implementation of the determination system 100 is not limited to the specific examples described above. For example, as shown in FIG. 1, the imaging device 10, the foreign object determination device 20, and the output device 30 may each be implemented as a separate device. In this case, for example, the imaging device 10 and the output device 30 may be installed as shown in FIGs. 3 to 5, while the foreign object determination device 20 may be configured using an information processing device 90 such as a server device or a cloud. In this case, the imaging device 10, the foreign object determination device 20, and the output device 30 may each further include a communication device.

An example of the operation of the determination system 100 configured in this manner will now be described. For example, the imaging device 10 may be configured to repeatedly perform imaging at predetermined timings and to transmit the determination target image obtained by imaging to the foreign object determination device 20 according to a certain rule (sequentially or at fixed intervals). In this case, the operator of the heavy machinery 40 transports the iron scrap from Area A to Area B without being particularly conscious of the imaging. If information indicating the presence of foreign objects is output from the output device 30, the operator of the heavy machinery 40 may perform an operation to remove the foreign objects from the iron scrap subject to the determination.

The operator of the heavy machinery 40 operates the heavy machinery 40 to travel toward Area A. After operating the heavy machinery 40 to travel toward Area A in this manner and positioning the imaging device 10 to face Area A, the operator manipulates the imaging device 10. Such manipulation of the imaging device 10 may be performed, for example, by directly touching buttons or a touch panel provided on the imaging device 10, by using a manipulation device such as a remote controller connected to the imaging device 10 via short-range wireless communication, or by voice recognition in response to the operator uttering specific phrases (e.g., "Take a picture"). By performing such manipulation, an image of the iron scrap piled in Area A may be captured. The imaging device 10 may also capture an image of the iron scrap in Area A without specific manipulation by the operator, for example, by performing repeated imaging or capturing moving images.

The operator of heavy machinery 40 lifts the iron scrap using heavy machinery 40 (particularly a movable body 401) by operating the heavy machinery 40. When manipulating the imaging device 10, the operator of the heavy machinery 40 may manipulate the imaging device 10 while the iron scrap is lifted in this manner to capture an image of the iron scrap in a lifted state. FIG. 13 is a diagram showing a specific example of the state of the heavy machinery 40. In FIG. 13, the imaging device 10 captures an image with its lens facing diagonally upward or straight upward, such that a lift magnet 402 is included within the imaging range while the movable body 401 is raised upward. The imaging device 10 may be installed in fixed manner in this orientation, or may be installed as a device equipped with a movable body to allow the lens orientation to be changed. Imaging by the imaging device 10 in this state enables capturing of an image of the lifted iron scrap from below. Particularly when a lift magnet 402 is used, since the iron scrap is attached to its underside, it becomes possible to capture an image showing more iron scrap. Capturing such images enables more accurate determination of the presence or absence of a foreign object. Furthermore, when the imaging device 10 is installed facing the tip of the movable body 401, the image of the lifted iron scrap can be captured, for example, through repeated imaging or capturing of moving images, without requiring specific manipulation by the operator. Meanwhile, when the imaging device 10 captures an image in a state like that shown in FIG. 13, imaging is performed while the iron scrap is lifted. Consequently, the risk that the iron scrap could fall from the tip of the movable body 401 and collide with the lens or other components of the imaging device 10 relatively increases. Furthermore, positioning the movable body 401 of the heavy machinery in a state as shown in FIG. 13 also takes time, potentially reducing productivity. Even with this potential for collision and reduced productivity, as described above, it enables more accurate determination of the presence of a foreign object, therefore, this configuration may be adopted in this embodiment.

The operator of heavy machinery 40 lifts the iron scrap using the heavy machinery 40 by operating the heavy machinery 40 (particularly the movable body 401). The operator of the heavy machinery 40 may operate the machinery (particularly the movable body 401) so that an image of the lifted iron scrap is captured by the imaging device 10 over a broader area. For example, an operation may be performed to direct a portion holding the iron scrap (e.g., the tip portion of the movable body 401) of the heavy machinery 40, which is lifting the iron scrap, toward the imaging device. A more specific example of such an operation is directing the bottom surface (the surface where the iron scrap is attached) of the tip (e.g., the lift magnet 402) of the movable body 401 toward the imaging device 10. FIG. 14 is a diagram showing a specific example of the state of the heavy machinery 40. Imaging by the imaging device 10 in this state enables an image showing more of the lifted iron scrap to be captured. In FIG. 14, the imaging device 10 captures the image while the lens is oriented horizontally, diagonally downward, or diagonally upward, such that the lift magnet 402 is included within the imaging range. The imaging device 10 may be installed in fixed manner in this orientation or may be installed as a device equipped with the movable body to allow the lens orientation to be changed. Capturing such images enables more accurate determination of the presence of a foreign object. When the imaging device 10 and the operator are directed to the same direction, performing such an operation allows the operator to visually confirm the presence of the foreign object, enabling a double-check between the determination system and visual inspection. When the operator manipulates the imaging device 10, an image where the bottom surface of the lift magnet 402 faces the imaging device 10 may be captured by manipulating the imaging device 10 during such an operation. Furthermore, when the imaging device 10 is installed facing the tip of the movable body 401, the image of the iron scrap in the aforementioned state may be captured, for example, through repeated imaging or capturing of moving images, without requiring specific manipulation by the operator.

The operator of the heavy machinery 40 may unload the iron scrap that has been lifted from Area A into an area (Area C) different from Area A and Area B by operating the heavy machinery 40 (particularly the movable body 401). FIG. 15 is a schematic diagram showing such an Area C. In FIG. 15, the imaging device 10 captures an image with its lens oriented horizontally or at a diagonally downward angle so that Area C is included within the imaging range. The imaging device 10 may be installed in a fixed manner in this orientation, or may be installed as a device equipped with the movable body to allow the lens orientation to be changed. When unloading the iron scrap into Area C, the operator of the heavy machinery 40 may operate the machinery (particularly the movable body 401) to scatter the individual iron scrap pieces over a broad area, minimizing stacking. This operation enables the capture of a determination target image where the individual iron scrap pieces appear more clearly. For example, as shown in the embodiments in FIGs. 13 and 14, when an image is captured while the tip of the movable body 401 is gripping a single mass of the iron scrap, it is difficult to detect foreign objects hidden inside that mass. To address this issue, the present embodiment eliminates such detection failure by first scattering the iron scrap pieces within Area C. Consequently, the presence of the foreign object can be determined accurately. Furthermore, when the imaging device 10 and the operator are directed to the same direction, this operation allows the operator to visually confirm the presence of the foreign object, enabling a double-check between the determination system and visual inspection. When the operator manipulates the imaging device 10, the operator may capture an image showing the state in which individual iron scrap pieces are scattered, by manipulating the imaging device 10 while operating the heavy machinery 40. Furthermore, the image of the iron scrap in the aforementioned state may be captured without specific manipulation by the operator, for example, through repeated imaging or capturing of moving images. In the case where the iron scrap is temporarily unloaded into Area C for imaging, the operator collects the iron scrap placed in Area C after imaging is completed in Area C and moves it to Area B.

Hereinbelow, the features of the determination system 100 according to the first embodiment configured as mentioned above will be described. Conventionally, as described above, systems were based on the assumption that the transfer route of the transport device is fixed (hereinafter referred to as "fixed-route systems"), and consequently, it was sufficient to image the iron scrap somewhere along that route, leading to imaging devices being installed in fixed manner. Therefore, in systems where the transport route of the iron scrap is not fixed, such as when transporting iron scrap using heavy machinery 40, it was difficult to accurately determine the presence of a foreign object. In contrast, the determination system 100 according to the first embodiment acquires an image by capturing the iron scrap placed in Area A, which is a transport origin, or Area B, which is a transport destination, or the iron scrap in the transport process by the heavy machinery 40, using an imaging device provided on the heavy machinery 40, which enables determination of whether the iron scrap includes the foreign objects. The transport process refers to, for example, the process where transport equipment attached to the heavy machinery 40 grasps the iron scrap in one area (e.g., Area A), transports it from that area to another area (e.g., Area B or Area C), and releases the grasp in the transport destination area. Because the imaging device 10 moves with the movement of heavy machinery 40, it can always capture an image from a position close to the iron scrap compared to the case when the imaging device 10 is installed in a fixed manner, which enables accurate determination of whether foreign objects are mixed in the iron scrap. Furthermore, because the imaging device 10 moves with the movement of heavy machinery 40, imaging can be performed while maintaining a constant, nearly identical distance between the imaging device 10 and the iron scrap. This imaging method provides the following benefits. For instance, when determining the presence of a foreign object using a trained model obtained through learning process with labeled images, the imaging can capture the foreign objects at nearly the same distance and size as those in the labeled images. Consequently, it enables highly accurate determination of the foreign objects mixed within the recycling target iron scrap. This effect is not limited to using a trained model; it is similarly achievable when using techniques like pattern matching for determination. Furthermore, because the distance is consistently nearly the same, setting the camera focus to match the iron scrap enables imaging with consistently good focus. Additionally, the operator cab 404 of the heavy machinery 40 is often provided relatively closer to the iron scrap compared to operator cabs of fixed-route systems like overhead cranes. Furthermore, in fixed-route systems, the operator cab is often provided above the scrap, requiring the operator to visually inspect the iron scrap by looking down. In such cases, the device holding the scrap often obstructs the operator's field of view, making visual inspection difficult. Therefore, using the heavy machinery 40 to transport iron scrap instead of a fixed-route system offers the advantage of allowing operators to visually confirm the scrap from a closer position. Furthermore, the introduction of the heavy machinery is often relatively inexpensive and can be implemented in a shorter timeframe compared to the introduction of the fixed-route systems. Consequently, fixed-route systems are generally less common among businesses handling iron scrap. Therefore, the technology for handling the iron scrap using heavy machinery, as in this embodiment, also offers the benefit of enabling improved accuracy in detecting foreign objects mixed within iron scrap for a greater number of businesses.

### [Second Embodiment]

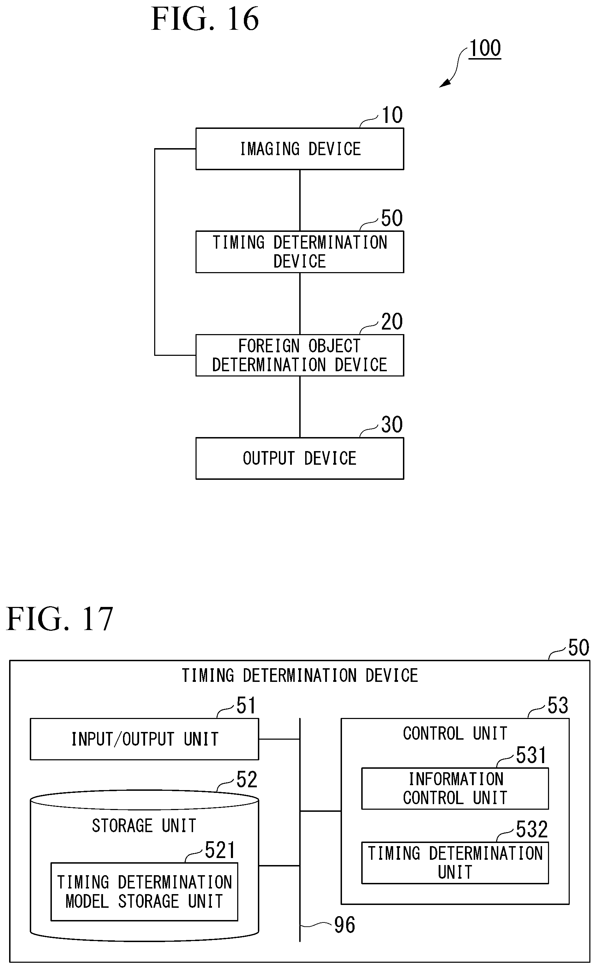

FIG. 16 is a schematic block diagram showing the system configuration of the determination system 100 according to the second embodiment of the present invention. The determination system 100 according to the second embodiment differs from the determination system 100 according to the first embodiment in that it further includes a timing determination device 50. The timing determination device 50 determines the timing at which the determination target image used by the foreign object determination device 20 for the determination process is acquired. Therefore, while the first embodiment is an embodiment where the timing for acquiring the determination target image is either determined by the user or acquired according to a fixed rule (e.g., at fixed intervals), the second embodiment is an embodiment where the timing for acquiring the determination target image is variable (free), and the determination system 100 performs the determination. The details of the timing determination device 50 will be described below.

FIG. 17 is a schematic block diagram showing a specific example of the functional configuration of the timing determination device 50. An input/output unit 51 acquires image data of the determination target image from the imaging device 10. The input/output unit 51 inputs data used for the timing determination process from other devices. For example, the input/output unit 51 inputs information concerning the control of the heavy machinery 40 (hereinafter referred to as "control information") from the heavy machinery 40 on which the imaging device 10 is provided. The control information may be, for example, information indicating the content of operation by the operator, electrical signals or control signals from electrical equipment provided on the heavy machinery 40, or hydraulic signals from hydraulic equipment provided on the heavy machinery 40. The input/output unit 51 outputs information indicating the timing determination result to other devices (e.g., the imaging device 10 or the foreign object determination device 20). The input/output unit 51 may also output image data corresponding to the timing indicated by the determination result to the foreign object determination device 20. The input/output unit 51 may be configured using an interface with a bus or cable, or may be configured using communication equipment. If the input/output unit 51 is communication equipment, the input/output unit 51 may perform data communication with other devices via a network according to control from the control unit 53. In this case, the communication equipment may be a device performing wireless communication or a device performing wired communication.

A storage unit 52 stores data used by the control unit 53. The storage unit 52 may also function as a timing determination model storage unit 521. The timing determination model storage unit 521 stores a timing determination model. The timing determination model is a function or logic, accompanied by predetermined input/output information, used to determine the timing at which a determination target image used by the foreign object determination device 20 in its determination processing is acquired.

The timing determination model is generated in advance by a model building process. This model building process may be executed, for example, by another device, by the device itself (the timing determination device 50), or by human labor.

The processor in the control unit 53 functions as an information control unit 531 and a timing determination unit 532 by executing the program.

The information control unit 531 controls the input and output of information. For example, the information control unit 531 acquires data (image data) of the determination target image from the imaging device 10 via the input/output unit 51. For example, the information control unit 531 acquires control information from the heavy machinery 40. For example, the information control unit 531 outputs data indicating the determination result from the control unit 53 to the imaging device 10 or the foreign object determination device 20 via the input/output unit 51.

The timing determination unit 532 performs timing determination processing using the timing determination model stored in the timing determination model storage unit 521, the determination target image acquired from the imaging device 10, and the control information acquired from the heavy machinery 40. By performing this timing determination processing, the timing determination unit 532 performs real-time determination processing on an image captured by the imaging device 10 and control information acquired from the heavy machinery 40, and then the determination results are output as appropriate via the input/output unit 51.
The following describes the timing determination model stored in the timing determination model storage unit 521.

The timing determination model may receive one or more pieces of control information from the heavy machinery 40 as input, and, based on whether the control information satisfies preset conditions, determine whether it is a timing at which the determination target image used by the foreign object determination device 20 in its determination process is to be acquired. The pre-set conditions may include, for example, whether a single piece of control information matches a certain value, is greater than or equal to (or less than or equal to) a certain value, exceeds (falls below) a certain value, or falls within a certain range. Multiple conditions may be set for multiple pieces of control information, and conditions may be set using logical expressions combining them.

Some specific examples of such control information will be described.

A first example is control information indicating that an operation to lift the iron scrap with the movable body 401 was performed, as shown in FIG. 13. Such control information may be information indicating the content of operation by the operator of the heavy machinery 40 (e.g., an electrical signal indicating operation of the control lever). For example, the time period during which operation information (an electrical signal) indicating that the operator of the heavy machinery 40 is performing the operation of lifting the iron scrap with the movable body 401 is obtained may be determined to be the timing at which the determination target image is acquired. Such control information may also be a hydraulic signal within the heavy machinery 40. The time period between a time when a hydraulic signal is obtained to activate the movable body 401 hydraulically so that the tip of the movable body 401 moves upward, and a time when a new hydraulic signal is obtained to activate the movable body 401 again after the action corresponding to that hydraulic signal is completed, may also be determined as the timing when the determination target image is acquired. Furthermore, the timing at which the determination target image is acquired may be determined by combining multiple such electrical signals and hydraulic signals and using them in the determination process.

A second example is control information indicating that an operation to direct the bottom surface (the surface where the iron scrap is attached) of the tip of the movable body 401 (e.g., a lift magnet 402) toward the imaging device 10 was performed, as shown in FIG. 14. Such control information may be information indicating the content of operation performed by the operator of the heavy machinery 40 (e.g., an electrical signal indicating operation of the control lever). For example, the time period during which control information (an electrical signal) indicating that the operator of the heavy machinery 40 is performing operation to direct the tip of the movable body 401 toward the imaging device 10 is obtained may be determined as the timing at which the determination target image is acquired. Such control information may also be a hydraulic signal within the heavy machinery 40. The time period between a time when a hydraulic signal is obtained to activate the movable body 401 hydraulically so that the tip of the movable body 401 faces the imaging device 10, and a time when a new hydraulic signal is obtained to activate the movable body 401 again after the action corresponding to that hydraulic signal is completed, may also be determined as the timing when the determination target image is acquired. Furthermore, it may be determined that the timing at which the determination target image is acquired is determined by combining multiple such electrical signals and hydraulic signals and using them for the determination process.

A third example is, as another specific example of the control information, control information indicating that an operation was performed to scatter individual iron scrap pieces within Area C such that they do not pile up, for example as shown in FIG. 15. Such control information may also be control information indicating that an operation was performed to lift the iron scrap once and then unload it, for example, when it is a rule that the iron scrap must always be unloaded from Area A to Area C at least once. A specific case will be explained below. That is, such control information may be information indicating the content of the operation performed by the operator of the heavy machinery 40 (e.g., an electrical signal indicating operation of the control lever). For example, when the operator of the heavy machinery 40 performs an operation to hold the iron scrap at the tip of the movable body 401 (e.g., an operation to generate magnetic force with the lift magnet 402), and subsequently obtains operation information (an electrical signal) indicating that the operator of the heavy machinery 40 performs an operation to release the iron scrap (e.g., an operation to stop generating magnetic force with the lift magnet 402), the time period until the next operation to start holding the iron scrap is performed may be determined as the timing when the determination target image is acquired. Such control information may also be a hydraulic signal in the heavy machinery 40. When a hydraulic signal for gripping the iron scrap at the tip of the movable body 401 (e.g., a hydraulic signal to close the attachment gripping the iron scrap) is obtained, and a hydraulic signal to release the iron scrap (e.g., a hydraulic signal to open the attachment) is subsequently obtained, the time period until the next hydraulic signal to start gripping the iron scrap is obtained may be determined as the timing at which the determination target image is acquired. Furthermore, the timing at which the determination target image used for the determination process is acquired may be determined by combining multiple electrical signals and hydraulic signals described above.

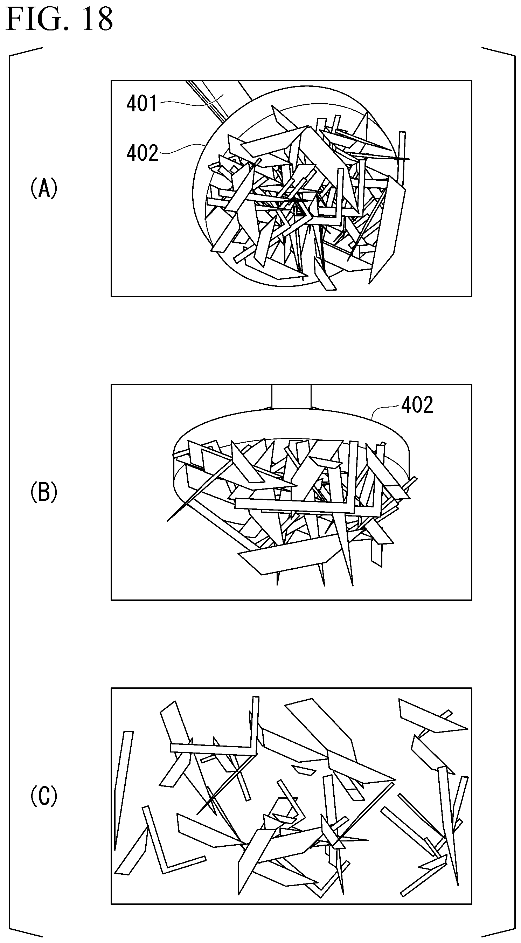

The timing determination model may, for example, receive an image captured by the imaging device 10 as an input and then output a determination result indicating whether it is a predetermined timing. An example of such a timing determination model is one that determines whether an image captured by the imaging device 10 is an image captured while looking up at the iron scrap from below, in a state where the iron scrap is lifted by the heavy machinery 40. Such a model may be obtained as a trained model by performing learning process using, for example, images captured in that state as training data. FIG. 18(A) is a diagram showing a specific example of training data used to perform the learning process. FIG. 18(A) shows an image captured from below in a state where the iron scrap is held by the lift magnet 402 and the movable body 401 connected to the lift magnet 402 is moved to an upward position. By performing learning process using such images of the iron scrap viewed from below while it is actually lifted by the heavy machinery 40 as training data, it is possible to acquire a trained model capable of determining this state from images. Such a trained model may be used as a timing determination model. More simply, feature values representing a predetermined pattern for images captured while the heavy machinery 40 is lifting the iron scrap and the scrap is viewed from below may be precalculated. Then, for a newly captured image from the imaging device 10 that has been input to the timing determination unit 532, the same feature values are calculated and compared with the precalculated feature values of the image to determine whether the new image is the image from below which was captured while the heavy machinery 40 was lifting the iron scrap.

Another specific example of the timing determination model is a model that determines whether an image captured by the imaging device 10 was captured with the attachment (e.g., a lift magnet 402) mounted on the tip of movable body 401 oriented such that its bottom surface (the surface to which iron scrap attached) faces the imaging device 10. Such a model may be obtained as a trained model by performing learning process using, for example, images captured in such a state as training data. FIG. 18(B) is a diagram showing a specific example of training data used to perform such a learning process. FIG. 18(B) shows an image captured with the iron scrap held by the lift magnet 402 and the bottom surface of the lift magnet 402 facing the imaging device 10. By performing the learning process using such images, where the bottom surface of the lift magnet 402 is actually facing the imaging device 10, as training data, it is possible to acquire a trained model capable of determining this state from images. Such a trained model may be used as a timing determination model. More simply, feature values representing predetermined patterns for images captured with the attachment's bottom surface facing the imaging device 10 may be precalculated. Then, for a newly captured image from the imaging device 10 that has been input to the timing determination unit 532, the same feature values are calculated and compared with the precalculated feature values of the image to determine whether the new image is the image which was captured with the attachment's bottom surface facing the imaging device 10.

Another specific example of the timing determination model is a model that determines whether an image captured by imaging device 10 shows individual iron scrap pieces scattered within Area C in a manner preventing them from stacking on top of each other. In other words, this timing determination model determines whether an image was captured while the iron scrap that had been lifted at least once by heavy machinery 40 was placed in an area different from a predetermined transport destination (e.g., Area C) before being transported to the predetermined transport destination (e.g., Area B). Such a model may be obtained as a trained model by performing a learning process using, for example, images captured in such a state as training data. FIG. 18(C) is a diagram showing a specific example of training data used to perform such learning process. FIG. 18(C) shows an image obtained by capturing an image of the iron scrap scattered on the ground. By performing learning process using such images of the iron scrap actually scattered on the ground as training data, it is possible to acquire a trained model capable of determining this state from images. This trained model may be used as the timing determination model. More simply, feature values representing predetermined patterns for images showing the iron scrap scattered on the ground may be precalculated. Then, for a newly captured image from the imaging device 10 that has been input to the timing determination unit 532, the same feature values are calculated and compared with the precalculated feature values of the image to determine whether the new image is the image in which the iron scrap is scattered on the ground. The above description has outlined a method for mechanically determining the timing for determination using a timing determination model, based on electrical signals, hydraulic signals, or the identification of the state of acquired images.

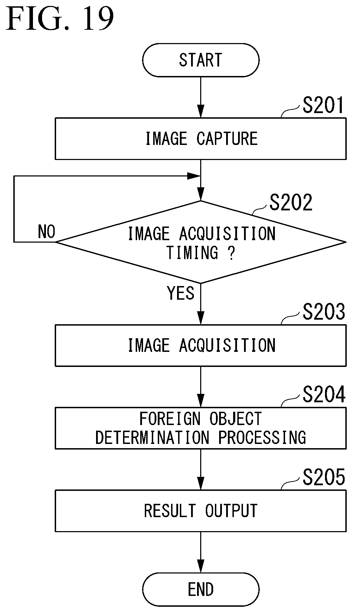

FIG. 19 is a flowchart showing a specific example of the processing of the determination system 100 according to the second embodiment. The imaging device 10 continuously captures images (Step S201). The timing determination device 50 determines the image acquisition timing (hereinafter also referred to as the "processing timing") at which the determination target image used for the determination processing is acquired (Step S202). The foreign object determination device 20 waits until a timing is determined as the image acquisition timing. When it is determined that a timing is the image acquisition timing (Step S202-YES), the foreign object determination device 20 acquires the image data captured at that timing or immediately before it (Step S203). It then performs the determination processing using the acquired image data and the foreign object determination model (Step S204). The foreign object determination device 20 then transmits information indicating the determination result to the output device 30 (Step S205).

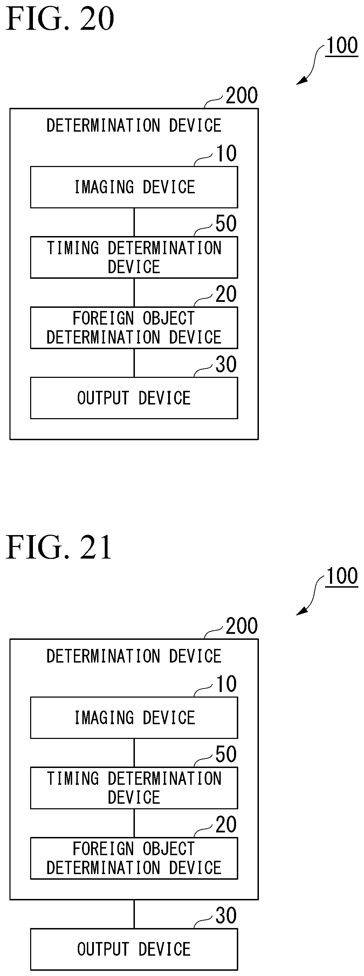

Next, using FIGs. 20 to 24, a specific example of the implementation of the determination device 200 will be explained.

A determination device 200, an image acquisition device 400, a terminal device 300, and devices connected to these devices (the imaging device 10, the output device 30, and the image acquisition device 400) shown in FIGs. 20 to 24, as well as the terminal device 300, may each be configured using, for example, a smartphone or tablet. In this case, the smartphone or tablet functions as the determination device 200, etc., by launching an application installed on the smartphone or tablet. Furthermore, the devices connected to the determination device 200, etc., may be configured using equipment connected to the smartphone or tablet.

FIG. 20 is a diagram showing a first specific example of implementing the determination system 100 according to the second embodiment. In the determination system 100 shown in FIG. 20, the imaging device 10, the foreign object determination device 20, the output device 30, and the timing determination device 50 are configured as a single determination device 200. The determination device 200 configured in this manner may further include a manipulation unit (such as a touch panel, buttons, or a keyboard) to receive user manipulations, e.g., from a worker. The user may be, for example, an operator of the heavy machinery 40.

The imaging device 10 of the determination device 200 captures an image at a predetermined timing without user manipulation. The imaging device 10 may continuously capture moving images. The timing determination device 50 determines the timing at which the determination target image is acquired based on input data (an image captured by the imaging device 10 or control information of the heavy machinery 40). If the timing determination device 50 determines that the timing corresponds to the time when the determination target image used by the foreign object determination device 20 in its determination process is acquired, the timing determination device 50 outputs the image captured at that timing (the determination target image) to the foreign object determination device 20. The foreign object determination device 20 determines the presence of foreign objects using the image captured at that timing (the determination target image). The determination result is output to the user via the output device 30.

In the first specific example, the determination device 200 may be manipulated by the user, and the imaging device 10 may activate in response to the manipulation to capture an image of the iron scrap subject to the determination. In this case as well, the foreign object determination device 20 performs processing based on the determination result from the timing determination device 50.

FIG. 21 is a diagram showing a second specific example of implementing the determination system 100 according to the second embodiment. In the determination system 100 shown in FIG. 21, the imaging device 10, the foreign object determination device 20, and the timing determination device 50 are configured as the determination device 200, while the output device 30 is configured as another device. The determination device 200 configured in this manner is, in this case, connected to the output device 30 in a manner enabling communication (e.g., wireless communication). Therefore, the determination device 200 and the output device 30 may each further include communication devices.

The determination device 200 may be configured using, for example, a smartphone or tablet, or may be configured as a device with information processing functions added to an imaging device, such as a smart camera. Such information processing functions may be built within a single housing with the imaging device 10, or may be built by connecting a single-board computer to the imaging device 10. The information processing functions serve as the foreign object determination device 20 and the timing determination device 50.

The timing determination device 50 determines the timing at which the determination target image is acquired based on input data (such as images captured by the imaging device 10 or control information of the heavy machinery 40). If it determines that the timing corresponds to the time when the determination target image used by the foreign object determination device 20 for its determination process is acquired, the timing determination device 50 outputs the image at that timing (the determination target image) to the foreign object determination device 20. The foreign object determination device 20 acquires the image captured at that timing (the determination target image) and determines the presence of foreign objects. The determination result is output to the user via the output device 30.

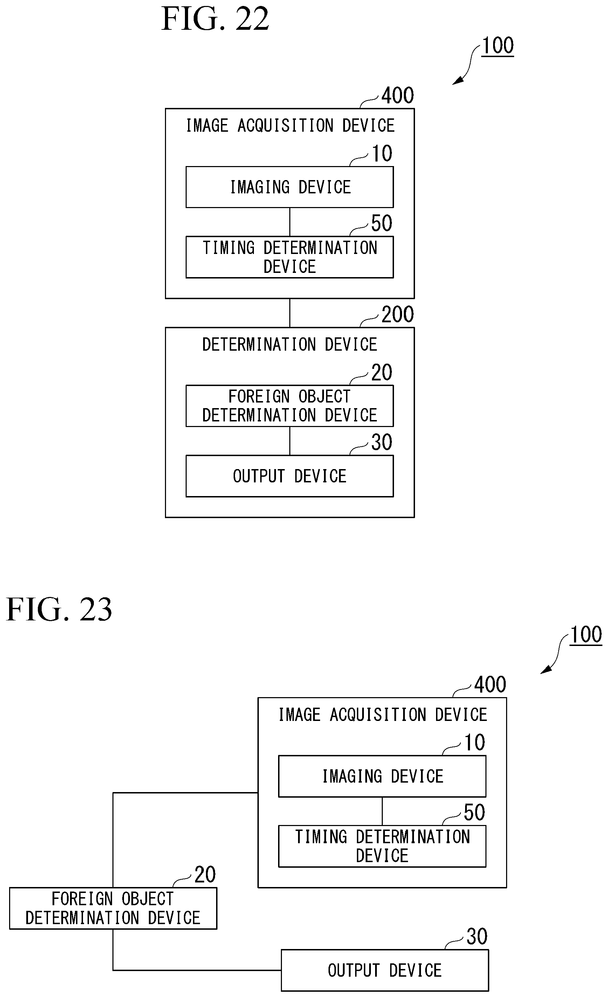

FIG. 22 is a diagram showing a third specific example of implementing the determination system 100 according to the second embodiment. In the determination system 100 shown in FIG. 22, the imaging device 10 and the timing determination device 50 are configured as the image acquisition device 400, and the foreign object determination device 20 and the output device 30 are configured as the determination device 200. The image acquisition device 400 configured in this manner may be provided, for example, at locations where the imaging device 10 for the heavy machinery 40 is installed as shown in FIGs. 3 to 5. In this case, the image acquisition device 400 and the determination device 200 are connected such that they can communicate (e.g., via wireless communication). Therefore, the image acquisition device 400 and the determination device 200 may each further include a communication device.

The image acquisition device 400 transmits an image captured by the imaging device 10 at the timing determined by the timing determination device 50 to the determination device 200. The determination device 200 may be provided, for example, at the location where the output device 30 of the heavy machinery 40 is installed as shown in FIGs. 3 to 5. The determination device 200 receives the determination target image from the image acquisition device 400 via communication and performs the determination processing. The determination device 200 outputs the determination result via the output device 30.

FIG. 23 is a diagram showing a fourth specific example of implementing the determination system 100 according to the second embodiment. In the determination system 100 shown in FIG. 23, the imaging device 10 and the timing determination device 50 are configured as the image acquisition device 400, and the foreign object determination device 20 and the output device 30 are provided respectively. The image acquisition device 400 configured in this manner may be provided, for example, at locations where the imaging device 10 for the heavy machinery 40 is installed as shown in FIGs. 3 to 5. In this case, the image acquisition device 400 and the foreign object determination device 20 are connected such that they can communicate (e.g., via wireless communication). Therefore, the image acquisition device 400 and the foreign object determination device 20 may each further include a communication device. The foreign object determination device 20 may be configured using an information processing device 90, such as a server device or cloud.

The image acquisition device 400 transmits the image captured by the imaging device 10 at the timing determined by the timing determination device 50 to the foreign object determination device 20. The foreign object determination device 20 may be provided, for example, at the location where the output device 30 of the heavy machinery 40 is installed as shown in FIGs. 3 to 5. The foreign object determination device 20 receives the determination target image from the image acquisition device 400 via communication and performs the determination process. The foreign object determination device 20 outputs the determination result via the output device 30.

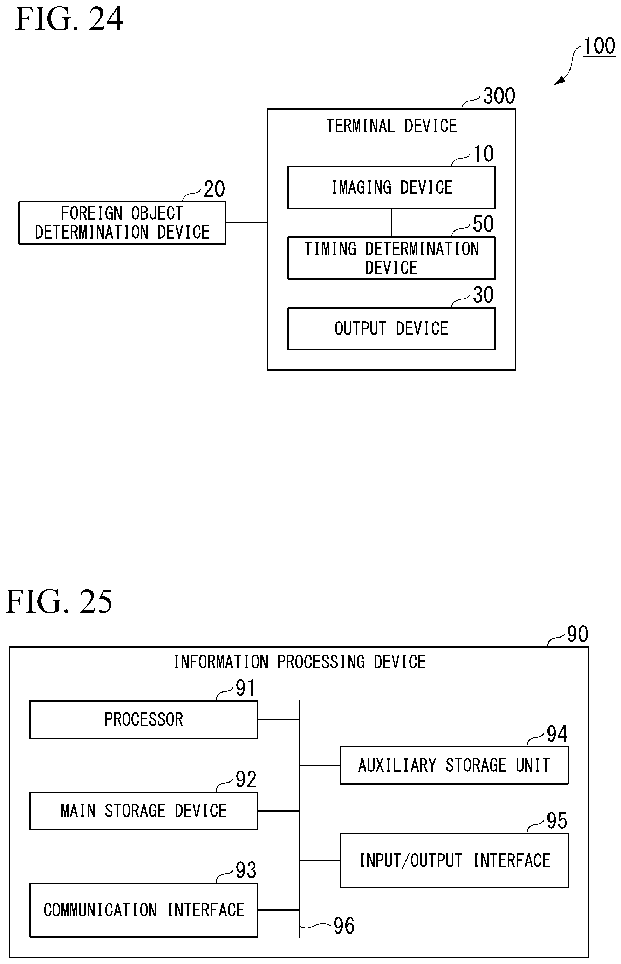

FIG. 24 is a diagram showing a fifth specific example of implementing the determination system 100 according to the second embodiment. In the determination system 100 shown in FIG. 24, the imaging device 10, the timing determination device 50, and the output device 30 are configured as the terminal device 300, while the foreign object determination device 20 is configured as another device. The foreign object determination device 20 and the terminal device 300 are connected via a communication path such as a network to enable communication. The foreign object determination device 20 may be configured using an information processing device 90, such as a server device or a cloud.

The terminal device 300 configured in this manner may be provided, for example, at locations such as those shown in FIGs. 3 to 5 where it is installed as the output device 30 of the heavy machinery 40. The imaging device 10 of the terminal device 300 performs imaging at predetermined timings without requiring user manipulation. The imaging device 10 may also capture moving images continuously. The timing determination device 50 determines the timing based on input data (such as images captured by the imaging device 10 or control information of the heavy machinery 40). When it is determined as the timing to acquire a determination target image that is to be used by the foreign object determination device 20 for its determination process, the terminal device 300 transmits the image data to the foreign object determination device 20.

The foreign object determination device 20 receives image data from the terminal device 300 and uses that image to determine the presence of the foreign object. The determination result is output to the user via the output device 30. Such a determination device 200 may be configured using, for example, a smartphone or tablet.

Specific examples of the implementation of the determination system 100 according to the second embodiment have been explained above using FIGs. 20 to 24, but the implementation of the determination system 100 is not necessarily limited to the specific examples described above. For example, as shown in FIG. 16, the imaging device 10, the foreign object determination device 20, the output device 30, and the timing determination device 50 may each be implemented as a separate device. In this case, for example, the imaging device 10 and the output device 30 may each be installed as shown in FIGs. 3 to 5, and the foreign object determination device 20 may be configured using an information processing device 90 such as a server device or a cloud. The timing determination device 50 may be configured to connect to the imaging device 10 without passing through a network. In this case, the imaging device 10, the foreign object determination device 20, the output device 30, and the timing determination device 50 may each additionally include a communication device.

In the determination system 100 according to the second embodiment configured in this manner, the timing determination device 50 determines the timing at which an appropriate image is likely to have been captured. An image captured at the determined timing is acquired for performing the foreign object determination. This enables accurate determination of the presence of the foreign objects mixed within the recycling target iron scrap. Furthermore, only the image captured at the timing of the determination result is transmitted to the foreign object determination device 20 via the network. This reduces the resources and communication data volume required to transmit the determination target image. Furthermore, by determining the timing and performing processing only at that specific moment, power consumption can be kept low. This is particularly advantageous in environments with limited power capacity, such as power sources provided on a heavy machinery. Keeping power consumption low enables compact device designs where the imaging device, the foreign object determination device, and the output device can all be activated using wires and power supplied from the heavy machinery, and the reduced power consumption per camera also allows for the installation of multiple cameras per unit. Furthermore, by determining the timing and performing processing only at that specific timing, it becomes possible to suppress the output of false detections to the worker. That is, it can be possible that the foreign object determination device 20 processes and generates a false detection at a timing when it is clearly evident that no iron scrap is being captured. It becomes possible to prevent such false detections from being output to the worker.

FIG. 25 is a schematic diagram showing an example of the hardware configuration of the information processing device 90 applied to this embodiment. The information processing device 90 includes a processor 91, a main storage device 92, a communication interface 93, an auxiliary storage device 94, an input/output interface 95, and an internal bus 96. The processor 91, the main storage device 92, the communication interface 93, the auxiliary storage device 94, and the input/output interface 95 are interconnected via the internal bus 96 for communication.

Examples of the information processing devices 90 include, for instance, a smartphone, a tablet, a personal computer, a server device, a PLC (Programmable Logic Controller), and dedicated equipment. The processor 91 and the main storage device 92 may be configured using general devices such as a CPU (Central Processing Unit). They may also be configured using an ASIC (Application Specific Integrated Circuit), a PLD (Programmable Logic Device), or an FPGA (Field Programmable Gate Array). The program executed by the processor 91 may be recorded on a computer-readable recording medium. The computer-readable recording medium includes, for example, a portable medium such as a flexible disk, a magneto-optical disk, a ROM, a CD-ROM, and a semiconductor storage device (e.g., SSD), as well as a storage device such as a hard disk or a semiconductor storage device built into a computer system. The above program may also be transmitted via telecommunication lines. The communication interface 93 is configured using communication devices. The auxiliary storage device 94 is configured using storage devices such as magnetic hard disk drives or semiconductor storage devices. The input/output interface 95 is the interface between external devices and the information processing device 90.

The information processing device 90 may be applied, for example, to the foreign object determination device 20 and the timing determination device 50. In this case, the input/output unit 21 and the input/output unit 51 may be configured using a communication interface 93 or using an input/output interface 95. The storage unit 22 and the storage unit 52 may be configured using an auxiliary storage device 94. Furthermore, the control unit 23 and the control unit 53 may be configured using the processor 91 and the main storage device 92. Additionally, the information processing device 90 may be applied to the determination device 200 and the image acquisition device 400.

### (Modification Examples)

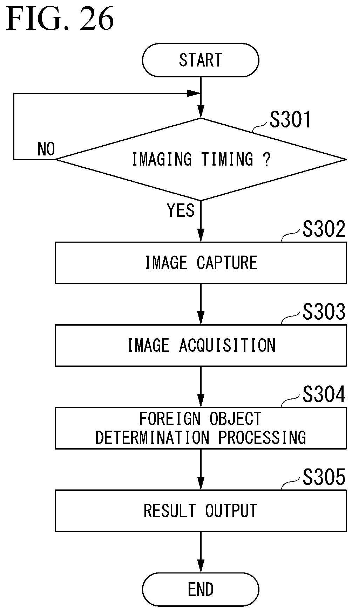

FIG. 26 is a flowchart showing a first modification example of the processing of the determination system 100 according to the second embodiment. First, the timing determination device 50 determines the imaging timing (also referred to as the processing timing) at which an image is captured, by using one or more pieces of control information of the heavy machinery 40 (Step S301). Other devices in the determination system 100 wait until it is determined as the imaging timing. When it is determined as the imaging timing (Step S301-YES), the imaging device 10 captures an image at that timing (Step S302). The foreign object determination device 20 acquires the captured image data (Step S303). Then a determination process is performed by using the acquired image data and the foreign object determination model (Step S304). The foreign object determination device 20 then transmits information indicating the determination result to the output device 30 (Step S305). In this way, by operating all steps of image capture, image acquisition, foreign object determination processing, and result output only at the imaging timing, it is possible to suppress power consumption.

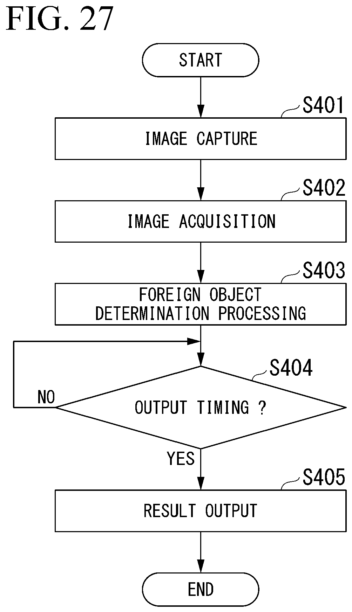

FIG. 27 is a flowchart showing a second modification example of the processing of the determination system 100 according to the second embodiment. The imaging device 10 continuously captures images (Step S401). The foreign object determination device 20 continuously acquires image data captured by the imaging device 10 (Step S402). Then, a determination process is performed using the acquired image data and the foreign object determination model (Step S403). The timing determination device 50 determines the output timing (also referred to as the processing timing) for outputting the determination result from the foreign object determination model, using one or more pieces of control information of the heavy machinery 40 or the captured image data (Step S404). The foreign object determination device 20 waits to output the determination result until it is determined as the output timing. If it is determined that the timing is an output timing (Step S404-YES), the foreign object determination device 20 transmits information indicating the determination result at that point to the output device 30 (Step S405). By the operation in this manner, it becomes possible to prevent the output of erroneous determination results to the operator of the heavy machinery 40 for such an image where it is clearly evident that no iron scrap is captured.

As described above, in the second embodiment, the timing determination unit 532 of the timing determination device 50 may perform timing determination processing based on control information acquired from the heavy machinery 40 without using an image captured by the imaging device 10. In this case, the timing determination unit 532 may perform imaging in the imaging device 10 at the determined timing by controlling the imaging device 10. Control of the imaging device 10 by the timing determination unit 532 may be performed, for example, by the processor of the timing determination device 50 executing a program.

Additionally, the foreign object determination device 20 may acquire the determination target image as follows. The image acquisition device 400 stores images captured by the imaging device 10 in a storage device (e.g., the storage unit 52 of the timing determination device 50 or the storage unit of another information processing device). The foreign object determination device 20 accesses the storage device and acquires the determination target image from among the images stored therein based on the timing determined by the timing determination device 50.

Note that the "image acquisition timing", "imaging timing", and "output timing" described in the above second embodiment are collectively referred to as "processing timing".

Furthermore, as another modification example applicable to both the first and second embodiments, while the above explanation uses an image of iron scrap transported by the heavy machinery 40 as the determination target, the transport of the iron scrap may be performed by other equipment. For example, the determination system 100 may be applied in a configuration where the iron scrap is transported by equipment such as an overhead crane. In this case, the imaging device 10 may be mounted, for example, on a part of the moving crane. Specifically, in the equipment including a crane body capable of traveling in both directions (travel direction) along a predetermined direction, a trolley capable of moving (travelling) in a direction perpendicular to the travel direction (lateral travel direction) on a horizontal plane including the travel direction within the crane body, and a hoisting tool provided on the trolley for hoisting the transported object, at least one camera may be provided on the crane body, the trolley, or a holding tool for holding the transported object in the hoisting tool. In other words, the imaging device 10 may be provided on the transporter, and the transporter may be a heavy machinery 40 or a crane.

Although the embodiments of the present invention have been described in detail with reference to the accompanying drawings, the specific configurations are not limited to the embodiments, and designs and the like within the scope of the present invention are also included.

### REFERENCE SIGNS LIST

100 Determination system, 10 Imaging device, 20 Foreign object determination device, 30 Output device, 40 Heavy machinery, 401 Movable body, 402 Lift magnet, 403 Main body, 404 Operator cab, 405 Rotating body, 406 Traveling body, 21 Input/output unit, 22 Storage unit, 221 Foreign object determination model storage unit, 23 Control unit, 231 Information control unit, 232 Foreign object determination unit, 200 Determination device, 300 Terminal device, 51 Input/output unit, 52 Storage unit, 521 Timing determination model storage unit, 53 Control unit, 531 Information control unit, 532 Timing determination unit, 400 Image acquisition device

## Claims

1. A determination system comprising:
an imaging device provided on a transporter for transporting iron scrap; and
a foreign object determination device that acquires a determination target image captured by the imaging device and determines whether a foreign object is present in the iron scrap.

2. The determination system according to claim 1, wherein the imaging device is provided on a main body or a movable body of the transporter.

3. The determination system according to claim 1 or 2, wherein the imaging device captures an image of the iron scrap during a transport process by the transporter.

4. The determination system according to any one of claims 1 to 3, further comprising a timing determination device that determines a processing timing, which is one of: an image acquisition timing for acquiring the determination target image; an imaging timing for capturing the determination target image; and an output timing for outputting a determination result by the foreign object determination device, wherein:
when the timing determination device determines the image acquisition timing, the foreign object determination device acquires an image captured at the image acquisition timing from among the images captured by the imaging device,
when the timing determination device determines the imaging timing, the imaging device captures the image at the imaging timing, and
when the timing determination device determines the output timing, the foreign object determination device outputs a result of the determination made at the output timing.

5. The determination system according to claim 4, wherein the timing determination device determines the processing timing based on an image captured by the imaging device or control information of the transporter.

6. The determination system according to any one of claims 1 to 5, wherein the foreign object determination device acquires, for determination, a determination target image of the iron scrap being lifted by the transporter, captured from below.

7. The determination system according to any one of claims 1 to 6, wherein the foreign object determination device acquires, for determination, a determination target image captured in a state where a portion holding the iron scrap being lifted by the transporter is facing the imaging device.

8. The determination system according to any one of claims 1 to 7, wherein the foreign object determination device acquires, for determination, a determination target image captured in a state where the iron scrap lifted at least once by the transporter is, prior to being transported to a predetermined transport destination, placed in an area different from the transport destination.

9. A determination method comprising:
an image capture step of capturing an image with an imaging device provided on a transporter for transporting iron scrap,
an acquisition step of acquiring an image captured by the imaging device as a determination target image, and
a foreign object determination step of determining whether the iron scrap includes a foreign object using the determination target image acquired in the acquisition step.

10. The determination method according to claim 9, wherein, in the image capture step, an image of the iron scrap being lifted by the transporter is captured from below.

11. The determination method according to claim 9 or 10, wherein, in the image capture step, an image is captured in a state where a portion holding the iron scrap being lifted by the transporter is facing the imaging device.

12. The determination method according to any one of claims 9 to 11, wherein, in the image capture step, an image is captured in a state where the iron scrap lifted at least once by the transporter is, prior to being transported to a predetermined transport destination, placed in an area different from the transport destination.

13. A computer program for causing a computer to function as a foreign object determination device, for determining whether a foreign object is present in iron scrap, by acquiring a determination target image captured by an imaging device provided on a transporter for transporting the iron scrap and using the acquired determination target image.
